# EUROPEAN PATENT APPLICATION

(11) **EP 3 760 974 A1**
(43) Date of publication of application: **06.01.2021**
(21) Application number: 19761398.7
(22) Date of filing: 29.01.2019
(51) Int. Cl.: G01C 21/28, G01S 19/45, G01S 19/47, G01S 19/52, G01S 19/53

(54) **NAVIGATION DEVICE, VSLAM CORRECTION METHOD, SPATIAL INFORMATION ESTIMATING METHOD, VSLAM CORRECTION PROGRAM, AND SPATIAL INFORMATION ESTIMATING PROGRAM**

(30) Priority: 28.02.2018 JP 2018034787
(71) Applicant: FURUNO ELECTRIC CO., LTD., Nishinomiya-City Hyogo 662-8580 (JP)
(72) Inventor: NAKAMURA, Hiraku, Nishinomiya-City, Hyogo 662-8580 (JP); TODA, Hiroyuki, Nishinomiya-City, Hyogo 662-8580 (JP); SONOBE, Tatsuya, Nishinomiya-City, Hyogo 662-8580 (JP); FUJISAWA, Naomi, Nishinomiya-City, Hyogo 662-8580 (JP)
(74) Representative: Müller Hoffmann & Partner
(86) International application number: PCT/JP2019/002832
(87) International publication number: WO 2019/167517

(57) **Abstract**

The purpose is to calculate an absolute spatial relationship between a device and other characteristic points etc. with high precision by using VSLAM. A navigation device 10 includes a VSLAM calculating module 121, a GNSS rate calculating module 122, and a scale correction value calculating module 123. The GNSS rate calculating module 122 calculates a GNSS rate using one of an amount of change in a phase of a GNSS signal and an amount of change in a frequency of the GNSS signal. The VSLAM calculating module 121 estimates VSLAM locations at a plurality of time points by performing a VSLAM calculation using a video image. The scale correction value calculating module 123 calculates a scale correction value for the VSLAM location by using the VSLAM locations at two or more time points of the plurality of time points estimated by the VSLAM calculating module 121, and the GNSS rate.

## Description

### TECHNICAL FIELD

The present disclosure relates to a navigation device utilizing an art of VSLAM (Visual Simultaneous Localization and Mapping).

### BACKGROUND OF THE INVENTION

Currently, an art of VSLAM (Visual Simultaneous Localization and Mapping) is utilized in various fields.

A device utilizing VSLAM estimates spatial information, such as a characteristic point around the device by using video image acquired from a monocular camera, and, for example, maps the spatial information. In VSLAM, for example, a relative position of the device is calculated using the spatial information and the mapped result.

### [Reference Documents of Conventional Art]

### [Nonpatent Documents]

[Nonpatent Document 1] Georg Klein, David Murray, "Parallel Tracking and Mapping for Small AR Workspace," Active Vision Laboratory Department of Engineering Science University of Oxford
[Nonpatent Document 2] Takafumi Taketomi, Hideaki Uchiyama and Sei Ikeda, "Visual-SLAM Algorithms: a Survey from 2010 to 2016"

### DESCRIPTION OF THE DISCLOSURE

### [Problem to be Solved by the Disclosure]

However, although in VSLAM the relative spatial relationships between the device and other characteristic points can be calculated, an absolute spatial relationship has uncertainty.

Therefore, one purpose of the present disclosure is to provide an art which calculates an absolute spatial relationship between a device and other characteristic points etc. with high precision, by using VSLAM.

### [Summary of the Invention]

A navigation device of the present disclosure includes a GNSS rate calculating module, a VSLAM calculating module, and a scale correction value calculating module. The GNSS rate calculating module calculates a GNSS rate using one of an amount of change in a phase of a GNSS signal and an amount of change in a frequency of the GNSS signal. The VSLAM calculating module estimates VSLAM locations at a plurality of time points by performing a VSLAM calculation using a video image. The scale correction value calculating module calculates a scale correction value for the VSLAM location by using the VSLAM locations at two or more time points of the plurality of time points estimated by the VSLAM calculating module, and the GNSS rate.

With this configuration, the GNSS rate is calculated with high precision by using one of the amount of change in the phase of the GNSS signal and the amount of change in the frequency of the GNSS signal. Therefore, a distance based on the GNSS rate corresponding to the distance between the plurality of VSLAM locations is calculated with high precision. Thus, a ratio of the distance between the plurality of VSLAM locations to the distance based on the GNSS rate, that is, the scale correction value is calculated with high precision.

### [Effect of the Invention]

According to the present disclosure, an absolute spatial relationship between a device and other characteristic points etc. can be calculated with high precision by using VSLAM.

### BRIEF DESCRIPTION OF DRAWINGS

Fig. 1 is a functional block diagram illustrating a configuration of a navigation device according to a first embodiment of the present disclosure.
Fig. 2 is a functional block diagram illustrating a configuration of a calculator.
Fig. 3 is a view illustrating a principle of a correction of a scale according to the first embodiment of the present disclosure.
Fig. 4 is a view illustrating a principle of a correction of spatial information according to the first embodiment of the present disclosure.
Fig. 5 is a flowchart illustrating a first process flow of a VSLAM correcting method.
Fig. 6 is a flowchart illustrating a second process flow of the VSLAM correcting method.
Fig. 7 is a functional block diagram illustrating a configuration of a navigation device according to a second embodiment of the present disclosure.
Fig. 8 is a functional block diagram illustrating a configuration of a calculator according to the second embodiment of the present disclosure.
Fig. 9 is a flowchart illustrating a third process flow of the VSLAM correcting method.
Fig. 10 is a flowchart illustrating a fourth process flow of the VSLAM correcting method.
Fig. 11 is a functional block diagram illustrating a configuration of a navigation device according to a third embodiment of the present disclosure.
Fig. 12 is a functional block diagram illustrating a configuration of a calculator according to the third embodiment of the present disclosure.
Fig. 13 is a functional block diagram illustrating a configuration of a navigation device according to a fourth embodiment of the present disclosure.
Fig. 14 is a functional block diagram illustrating a configuration of a calculator according to the fourth embodiment of the present disclosure.
Fig. 15 is a functional block diagram illustrating a configuration of a navigation device according to a fifth embodiment of the present disclosure.
Fig. 16 is a functional block diagram illustrating a configuration of a calculator according to the fifth embodiment of the present disclosure.
Fig. 17 is a functional block diagram illustrating a configuration of a navigation device according to a sixth embodiment of the present disclosure.
Fig. 18 is a functional block diagram illustrating a configuration of a calculator according to the sixth embodiment of the present disclosure.
Fig. 19 is a functional block diagram illustrating a configuration of a calculator according to a seventh embodiment of the present disclosure.
Fig. 20 is a functional block diagram illustrating a configuration of a calculator according to an eighth embodiment of the present disclosure.
Fig. 21 is a flowchart illustrating a main flow of a VSLAM calculation with a constrained condition.
Fig. 22 is a flowchart illustrating a total optimization with a constrained condition.
Fig. 23 is a functional block diagram illustrating a configuration of a navigation device according to a ninth embodiment of the present disclosure.
Figs. 24(A) and (B) are views illustrating examples of support images.

### DETAILD DESCRIPTION OF THE INVENTION

A navigation device, a VSLAM correcting method, and a VSLAM correcting program according to a first embodiment of the present disclosure are described with reference to the drawings. Note that, below, although a mode in which a ship is used as a movable body is illustrated, the configuration of the present invention is also applicable to other water-surface movable bodies, underwater movable bodies, land movable bodies, or air movable bodies.

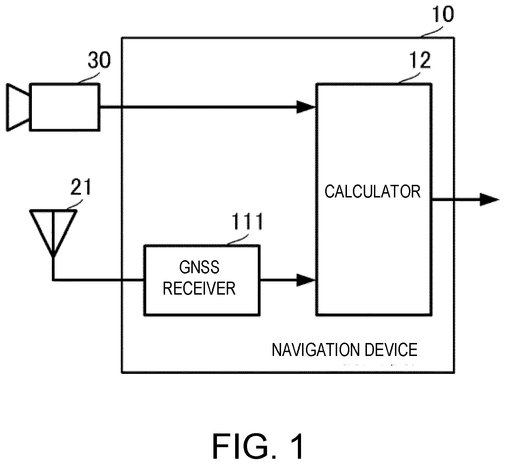

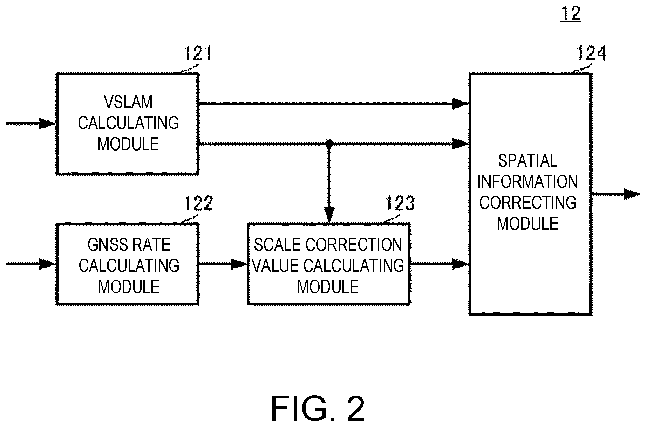

Fig. 1 is a functional block diagram illustrating a configuration of a navigation device according to a first embodiment of the present disclosure. Fig. 2 is a functional block diagram illustrating a configuration of a calculator according to the first embodiment of the present disclosure.

As illustrated in Fig. 1, a navigation device 10 may include a GNSS receiver 111 and a calculator 12. The GNSS receiver 111 may be connected to a GNSS antenna 21. The calculator 12 may be connected to the GNSS receiver 111 and a camera 30.

The GNSS antenna 21 may be installed in a ship (not illustrated) to which the navigation device 10 is mounted. The GNSS antenna 21 may be installed in a so-called "open sky environment." The GNSS antenna 21 may receive GNSS signals from GNSS satellites (not illustrated) and output them to the GNSS receiver 111.

The GNSS signal may be a signal in which a PRN (Pseudo Random Noise) code and navigational message data are overlapped with a carrier signal at a given frequency. The PRN code may be a code for identifying the positioning satellite as a transmission source. The navigational message data may be data including orbital information on the positioning satellite, and correction information.

The GNSS receiver 111 may be comprised of a memory which stores a program for acquiring and tracking the GNSS signal, and an arithmetic element, such as an IC, which executes this program. The GNSS receiver 111 may acquire and track the acquired GNSS signal by a known method. Here, the GNSS receiver 111 may acquire and track the code and the carrier signal.

The GNSS receiver 111 may acquire observation data by the acquisition and tracking, and output it to the calculator 12. The observation data may include at least an accumulated value (ADR) of a carrier phase. The GNSS receiver 111 may sequentially perform the acquisition of the accumulated value of the carrier phase at a given interval while synchronizing with time of the GNSS (e.g., every epoch). Note that the GNSS receiver 111 may also output a Doppler frequency of the carrier signal, a code phase, a pseudo range calculated by the code phase, a positioning location, etc. to the calculator 12, as the observation data.

The camera 30 is, for example, a monocular camera. The camera 30 may image the perimeter of the ship to which the navigation device 10 is mounted, and generate a video image. The camera 30 may output the video image to the calculator 12.

The calculator 12 may be comprised of a memory which stores a program for a VSLAM calculation, a calculation of a GNSS rate, a calculation of a scale correction value, and a correction of the spatial information, which are described later, and an arithmetic element, such as a CPU, which executes the program.

As illustrated in Fig. 2, the calculator 12 may include a VSLAM calculating module 121, a GNSS rate calculating module 122, a scale correction value calculating module 123, and a spatial information correcting module 124.

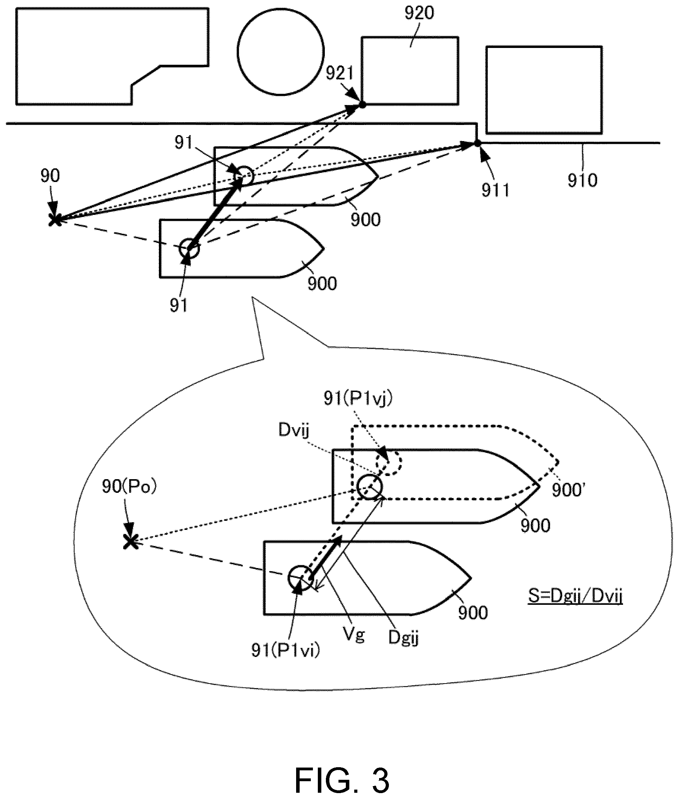

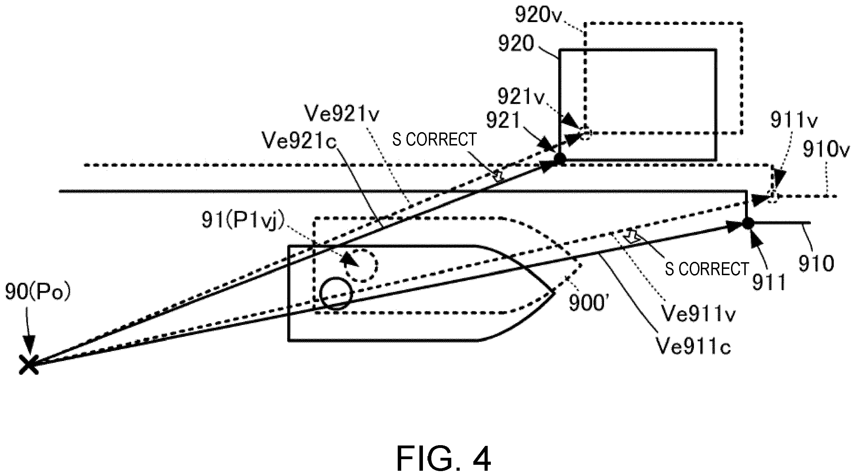

The VSLAM calculating module 121 may estimate the location of the device with respect to a reference point (see 90 (coordinates Po) in Figs. 3 and 4) (VSLAM location), and the spatial information on each characteristic point, by a known method using the acquired video image. Here, the VSLAM calculating module 121 may estimate the location of the device with respect to the reference point (VSLAM location) and the spatial information on each characteristic point, while synchronizing with the GNSS time. That is, the VSLAM calculating module 121 may estimate the location of the device with respect to the reference point (VSLAM location) and the spatial information on each characteristic point, for every acquisition time of the video image, while synchronizing with an acquisition time of the accumulated value of the carrier phase. For example, the VSLAM calculating module 121 may estimate the location of the device with respect to the reference point (VSLAM location) and the spatial information on each characteristic point, while synchronizing with a calculated time of a GNSS rate (described later). Note that the spatial information may be expressed by a spatial vector at the characteristic point on the basis of the reference point of the VSLAM calculation.

The VSLAM calculating module 121 may output the VSLAM location to the scale correction value calculating module 123 and the spatial information correcting module 124. Moreover, the VSLAM calculating module 121 may output the spatial information to the spatial information correcting module 124. Here, the VSLAM calculating module 121 may output the VSLAM location and the spatial information so as to be associated with the estimated time.

The GNSS rate calculating module 122 may calculate a GNSS rate by using an amount of change in the accumulated value of the carrier phase. Here, the GNSS rate calculating module 122 may calculate the GNSS rate at a given interval which is synchronized with the GNSS time.

By using the amount of change in the accumulated value of the carrier phase, the GNSS rate calculating module 122 can calculate the GNSS rate at high speed and with high precision. That is, the GNSS rate calculating module 122 can calculate the GNSS rate at high speed and with high precision, without performing processing, such as a determination of an integer-value bias, and acquisition of the correction information from an external device. The GNSS rate calculating module 122 may output the GNSS rate to the scale correction value calculating module 123. The GNSS rate calculating module 122 may output the GNSS rate so as to be associated with the calculated time.

The scale correction value calculating module 123 may calculate a scale correction value S for the VSLAM location by using a plurality of VSLAM locations and the GNSS rate. The scale correction value calculating module 123 may output the scale correction value S to the spatial information correcting module 124. As described above, since the GNSS rate is highly accurate, the scale correction value S may be calculated with high precision.

The spatial information correcting module 124 may correct the spatial information by using the scale correction value S. Here, the spatial information correcting module 124 may also correct the VSLAM location.

Next, a calculation principle of the scale correction value S and a correction principle of the spatial information are described more concretely.

Fig. 3 is a view illustrating a principle of the correction of the scale according to the first embodiment of the present disclosure. Fig. 4 is a view illustrating a principle of the correction of the spatial information according to the first embodiment of the present disclosure. Note that, below, suppose that the GNSS antenna 21 and the camera 30 are disposed substantially at the same location (observing location) 91 in a coordinate system of a ship 900. In more detail, the GNSS antenna 21 and the camera 30 are disposed at the same location at least in a horizontal plane in a hull coordinate system. Moreover, in Fig. 3, the VSLAM location is located in agreement with the GNSS location at a first time point ti, in order to facilitate description, but the following processing can be realized without being limited to this configuration.

The ship 900 may move from the first time point ti to a second time point tj. The camera 30 may perform the imaging and output the video image to the VSLAM calculating module 121.

The VSLAM calculating module 121 may set the reference point 90 and its location Po by using the video image, and estimate a VSLAM location P1vi at the first time point ti and a VSLAM location P1vj at the second time point tj. The first time point ti and the second time point tj are not limited to continuous time points, but may be two of a plurality of time points. The VSLAM calculating module 121 may output the VSLAM location P1vi at the first time point ti and the VSLAM location P1vj at the second time point tj to the scale correction value calculating module 123.

The scale correction value calculating module 123 may calculate a VSLAM distance Dvij by calculating a geometric difference between the VSLAM location P1vi at the first time point ti and the VSLAM location P1vj at the second time point tj. Note that, here, although the distance is calculated from the location difference between two time points, the distance may also be calculated using the location difference between three or more time points.

The scale correction value calculating module 123 may calculate a GNSS distance Dgij which is a traveling distance of the ship 900 (the observing location 91 of the ship 900) from the first time point ti to the second time point tj (more accurately, the calculated time immediately before the second time point tj) based on the GNSS signals by calculating an accumulated value of the GNSS rates Vg from the first time point ti to the second time point tj which are calculated by the GNSS rate calculating module 122.

The scale correction value calculating module 123 may calculate a scale correction value S by dividing an absolute value ABS(Dgij) of the GNSS distance Dgij by an absolute value ABS(Dvij) of the VSLAM distance Dvij. That is, the scale correction value calculating module 123 may calculate the scale correction value S by calculating S=ABS(Dgij)/ABS(Dvij).

Thus, the scale correction value calculating module 123 can calculate the scale correction value S with high precision by using the GNSS rate calculated with high precision. Further, in this configuration, since the calculated time of the GNSS rate Vj and the estimated time of the VSLAM location P1v may synchronize with each other by the highly-precise GNSS time, the scale correction value calculating module 123 can calculate the scale correction value S with higher precision.

The spatial information correcting module 124 may correct the spatial information by multiplying each spatial information, i.e., the spatial vector at each characteristic point by the scale correction value S. For example, in the example of Fig. 4, the spatial information on a characteristic point 911v of a quaywall 910v according to the VSLAM calculation is a spatial vector Ve911v in which the reference point 90 (coordinates Po) is used as a start point and the characteristic point 911v is used as an end point. However, this spatial vector Ve911v may contain uncertainty peculiar to the camera 30 as described in the above problem.

The spatial information correcting module 124 may calculate a spatial vector Ve911c in the absolute coordinate system by multiplying the spatial vector Ve911v according to the VSLAM calculation by the scale correction value S. That is, the spatial information correcting module 124 may calculate Ve911c=S•Ve911v. Here, the scale correction value S may be a value for correcting the error of the VSLAM location with respect to the reference point 90 (coordinates Po) with high precision, by using the highly-precise GNSS rate, as described above. Therefore, the spatial vector Ve911c may become a value obtained by correcting the spatial vector Ve911v according to the VSLAM calculation with high precision to the highly-precise value conforming to the absolute coordinate system. Therefore, the navigation device 10 can calculate the spatial vector Ve911v at a characteristic point 911 of a quaywall 910 in the absolute coordinate system with high precision.

Similarly, in the example of Fig. 4, the spatial information on a characteristic point 921v of a building 920v according to the VSLAM calculation may be a spatial vector Ve921v in which the reference point 90 (coordinates Po) is used as the start point and the characteristic point 921v is used as the end point. However, this spatial vector Ve921v may contain the uncertainty peculiar to the camera 30 as described in the above problem.

The spatial information correcting module 124 may calculate Ve921c=S•Ve921v. Therefore, the spatial vector Ve921c may become a value obtained by correcting the spatial vector Ve921v according to the VSLAM calculation with high precision to the highly-precise value conforming to the absolute coordinate system, and therefore, it can calculate the spatial vector Ve921v at a characteristic point 921 of a building 920 in the absolute coordinate system with high precision.

Thus, by using the configuration of this embodiment, the navigation device 10 can correct the error of the spatial information using the VSLAM calculation with high precision, and can acquire the spatial information around the ship 900 based on the value of the highly-precise actual scale. Therefore, the navigation device 10 may be possible to perform the highly-precise mapping for the perimeter of the ship 900.

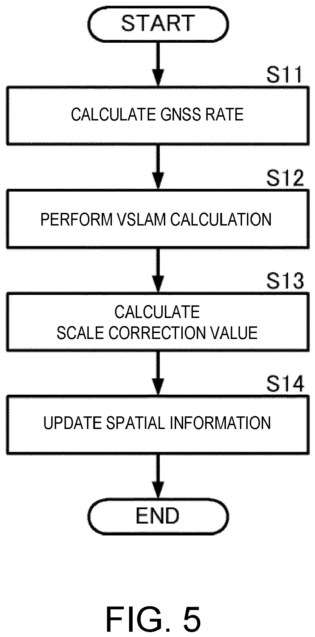

Note that, although in the above description the calculator 12 is divided into the plurality of functional blocks, it may be implemented by a program which achieves the processing illustrated in Fig. 5 and a processing unit which executes this program. Fig. 5 is a flowchart illustrating a first process flow of the VSLAM correcting method. Note that the concrete contents of each processing are described above, and therefore, description thereof is omitted.

The processing unit may calculate the GNSS rate based on the amount of change in the accumulated value of the carrier phase in the GNSS signal (Step S11). The processing unit may perform the VSLAM calculation based on the video image inputted from the camera, and estimate the VSLAM location and the spatial information (Step S12).

The processing unit may carry out the calculation of the GNSS rate and the estimation of the VSLAM location and the spatial information in the time synchronized fashion. Here, the time synchronization is not limited to a simultaneous and parallel execution, but the calculation of the GNSS rate and the estimation of the VSLAM location and the spatial information may be performed so as to be attached with respective time information, and, after that, the GNSS rate, and the VSLAM location and the spatial information with the same time information may be combined.

The processing unit may calculate the scale correction value S by using the GNSS rate and the plurality of VSLAM locations (Step S13). The processing unit may correct and update the spatial information by using the scale correction value S (Step S14).

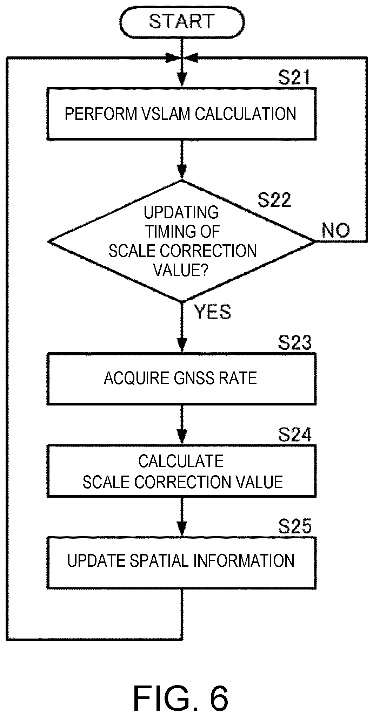

Note that, although in Fig. 5 the scale correction is sequentially performed, the scale correction may be performed at a given time interval as illustrated in Fig. 6. Fig. 6 is a flowchart illustrating a second process flow of the VSLAM correcting method.

The processing unit may perform the VSLAM calculation based on the video image inputted from the camera, and estimate the VSLAM location and the spatial information (Step S21). The processing unit may perform the estimation of the VSLAM location and the spatial information, synchronizing with the GNSS time.

Until it reaches an updating timing of the scale correction value (Step S22: NO), the processing unit may continuously perform the VSLAM calculation.

If it reaches the updating timing of the scale correction value (Step S22: YES), the processing unit may acquire the GNSS rate (Step S23).

The processing unit may calculate the scale correction value S by using the GNSS rate and the plurality of VSLAM locations (Step S24). The processing unit may correct and update the spatial information by using the scale correction value S (Step S25).

By performing such processing, the calculation of the scale correction value and the update of the spatial information can be performed suitably at the given interval, and the calculation load can be reduced while appropriately correcting the spatial information. This becomes especially effective, for example, when there are many characteristic points and the spatial information is enormous.

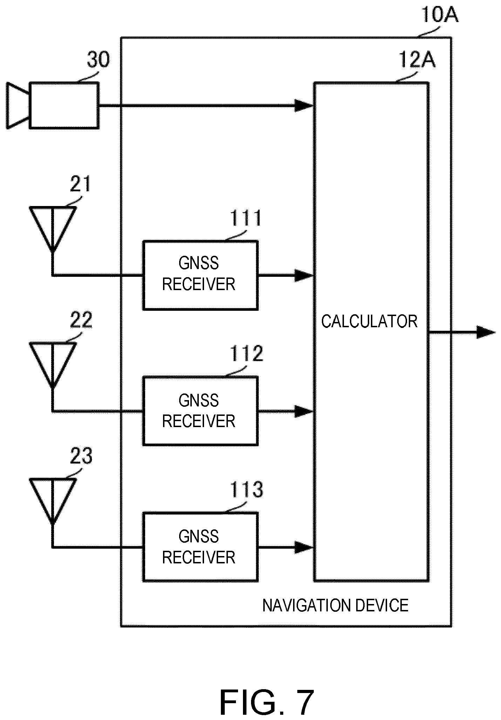

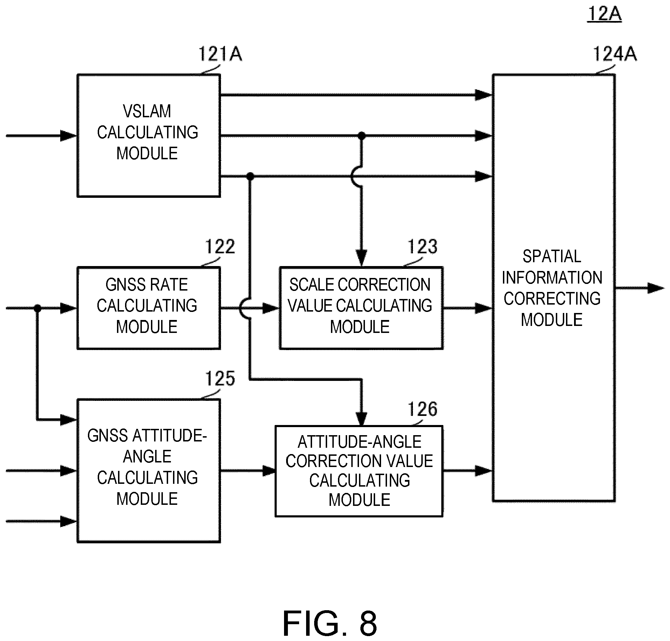

Next, a navigation device according to a second embodiment of the present disclosure is described with reference to the drawings. Fig. 7 is a functional block diagram illustrating a configuration of the navigation device according to the second embodiment of the present disclosure. Fig. 8 is a functional block diagram illustrating a configuration of a calculator according to the second embodiment of the present disclosure.

As illustrated in Figs. 7 and 8, a navigation device 10A and a calculator 12A according to the second embodiment differ from the navigation device 10 and the calculator 12 in that an attitude angle is corrected in addition to the correction of the scale. Other configurations of the navigation device 10A and the calculator 12A may be similar to those of the navigation device 10 and the calculator 12, and therefore, description of the similar parts is omitted.

The navigation device 10A may include the GNSS receiver 111, a GNSS receiver 112, a GNSS receiver 113, and the calculator 12A. The GNSS receiver 111 may be connected to the GNSS antenna 21, the GNSS receiver 112 may be connected to a GNSS antenna 22, and the GNSS receiver 113 may be connected to a GNSS antenna 23.

The calculator 12A may be connected to the GNSS receiver 111, the GNSS receiver 112, and the GNSS receiver 113, and be connected to the camera 30.

The GNSS antenna 21, the GNSS antenna 22, and the GNSS antenna 23 may be disposed so that one of the antennas is not located on a straight line which connects other two antennas. A spatial relationship of the GNSS antenna 21, the GNSS antenna 22, and the GNSS antenna 23 in the hull coordinate system is acquired beforehand and is stored in the calculator 12A. The GNSS antenna 21, the GNSS antenna 22, and the GNSS antenna 23 may each receive and output the GNSS signal.

The GNSS receiver 111 may acquire the observation data by the acquisition and tracking of the GNSS signal received by the GNSS antenna 21, and output it to the calculator 12A. The GNSS receiver 112 may acquire the observation data by the acquisition and tracking of the GNSS signal received by the GNSS antenna 22, and output it to the calculator 12A. The GNSS receiver 113 may acquire the observation data by the acquisition and tracking of the GNSS signal received by the GNSS antenna 23, and output it to the calculator 12A. Each observation data may include at least the accumulated value (ADR) of the carrier phase.

As illustrated in Fig. 8, the calculator 12A may include a VSLAM calculating module 121A, the GNSS rate calculating module 122, the scale correction value calculating module 123, the spatial information correcting module 124, a GNSS attitude-angle calculating module 125, and an attitude-angle correction value calculating module 126.

The VSLAM calculating module 121A may estimate the VSLAM location and the spatial information on each characteristic point by the known method, similar to the VSLAM calculating module 121 using the acquired video image. Moreover, the VSLAM calculating module 121A may estimate a VSLAM attitude angle with respect to a given reference axis which passes through the reference point, by the known method using the acquired video image. Here, the VSLAM calculating module 121A may estimate the VSLAM location, the VSLAM attitude angle, and the spatial information on each characteristic point, at a plurality of time points, synchronizing with the GNSS time.

The VSLAM calculating module 121A may output the VSLAM location to the scale correction value calculating module 123 and a spatial information correcting module 124A. The VSLAM calculating module 121A may output the VSLAM attitude angle to the attitude-angle correction value calculating module 126 and the spatial information correcting module 124A. The VSLAM calculating module 121A may output the spatial information to the spatial information correcting module 124A. Here, the VSLAM calculating module 121A may output the VSLAM location, the VSLAM attitude angle, and the spatial information so as to be associated with the estimated time.

The GNSS rate calculating module 122 may calculate the GNSS rate using the amount of change in the accumulated value of the carrier phase acquired by any one of the GNSS receiver 111, the GNSS receiver 112, and the GNSS receiver 113.

The scale correction value calculating module 123 may calculate the scale correction value S for the VSLAM location by using the plurality of VSLAM locations and the GNSS rate. The scale correction value calculating module 123 may output the scale correction value S to the spatial information correcting module 124A. As described above, since the GNSS rate is highly accurate, the scale correction value S is calculated with high precision.

The GNSS attitude-angle calculating module 125 may calculate the GNSS attitude angle based on the accumulated value of the carrier phase acquired by each of the GNSS receiver 111, the GNSS receiver 112, and the GNSS receiver 113, by the known method (e.g., a method using base line vectors between the GNSS antennas).

By using the accumulated value of the carrier phase, the GNSS attitude angle may be calculated with high precision.

The GNSS attitude-angle calculating module 125 may output the GNSS attitude angle to the attitude-angle correction value calculating module 126. Here, the GNSS attitude-angle calculating module 125 may output the GNSS attitude angle so as to be associated with the calculated time.

The attitude-angle correction value calculating module 126 may calculate an attitude-angle correction value for the VSLAM attitude angle by using the VSLAM attitude angle and the GNSS attitude angle which are synchronized. The attitude-angle correction value may be defined as a value which reduces an error contained in the VSLAM attitude angle by using the GNSS attitude angle. For example, the attitude-angle correction value calculating module 126 may calculate the correction value so that the coordinate system set in VSLAM can be expressed by a coordinate system on the basis of the GNSS attitude angle (an inclination of the hull coordinates with respect to local horizontal coordinates becomes the GNSS attitude angle), as the attitude-angle correction value.

The attitude-angle correction value calculating module 126 may output the attitude-angle correction value to the spatial information correcting module 124A.

As described above, since the GNSS attitude angle is highly accurate, the attitude-angle correction value may be calculated with high precision.

The spatial information correcting module 124A may correct the spatial information by using the scale correction value S and the attitude-angle correction value. Here, the spatial information correcting module 124A may also correct the VSLAM location and the VSLAM attitude angle.

Thus, since the scale correction value S and the attitude-angle correction value are highly accurate, the spatial information may be corrected with high precision. In particular, in the configuration and processing of the calculator 12A, since the spatial information is corrected by using the information on the attitude angle, the spatial information can be corrected with higher precision than the case where only the scale correction value is used.

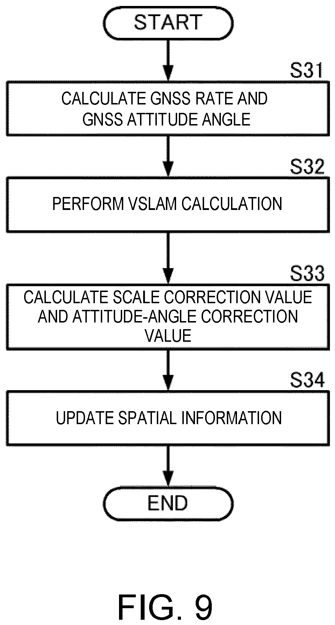

Although in the above description the calculator 12A is divided into the plurality of functional blocks, it may be implemented by a program which achieves the processing illustrated in Fig. 9 and a processing unit which executes this program. Fig. 9 is a flowchart illustrating a third process flow of the VSLAM correcting method. Note that the concrete contents of each processing are described above, and therefore, description thereof is omitted.

The processing unit may calculate the GNSS rate and the GNSS attitude angle by using the accumulated value of the carrier phase in the GNSS signal received by the plurality of GNSS antennas (Step S31). The processing unit may perform the VSLAM calculation based on the video image inputted from the camera, and estimate the VSLAM location, the VSLAM attitude angle, and the spatial information (Step S32). The processing unit may carry out the calculation of the GNSS rate, the calculation of the GNSS attitude angle, and the estimation of the VSLAM location, the VSLAM attitude angle, and the spatial information, while being synchronized.

The processing unit may calculate the scale correction value S by using the GNSS rate and the plurality of VSLAM locations, and calculate the attitude-angle correction value by using the GNSS attitude angle and the VSLAM attitude angle (Step S33). The processing unit may correct and update the spatial information by using the scale correction value S and the attitude-angle correction value (Step S34).

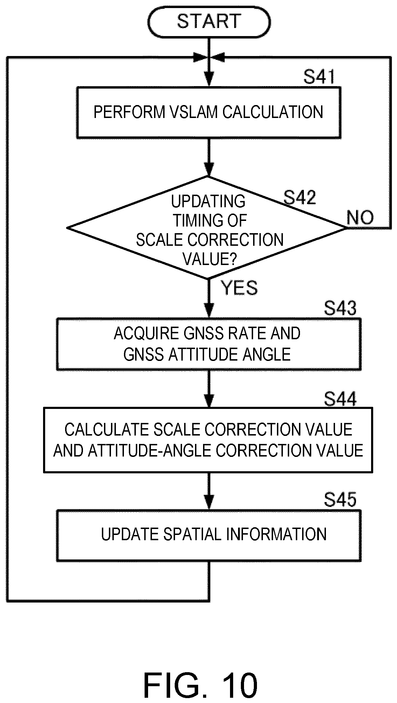

Note that, although in Fig. 9 the scale correction is sequentially performed, the scale correction may be performed at a given time interval as illustrated in Fig. 10. Fig. 10 is a flowchart illustrating a fourth process flow of the VSLAM correcting method.

The processing unit may perform the VSLAM calculation based on the video image inputted from the camera, and estimate the VSLAM location and the spatial information (Step S41). The processing unit may perform the estimation of the VSLAM location and the spatial information, synchronizing with the GNSS time.

Until it reaches the updating timing of the correction value (Step S42: NO), the processing unit may continuously perform the VSLAM calculation.

If it reaches the updating timing of the correction value (Step S42: YES), the processing unit may acquire the GNSS rate and the GNSS attitude angle (Step S43).

The processing unit may calculate the scale correction value S by using the GNSS rate and the plurality of VSLAM locations, and calculate the attitude-angle correction value by using the GNSS attitude angle and the VSLAM attitude angle (Step S44). The processing unit may correct and update the spatial information by using the scale correction value S and the attitude-angle correction value (Step S45).

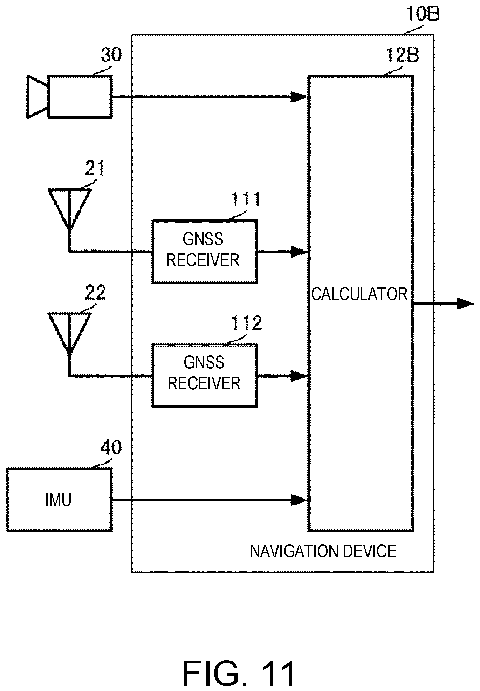

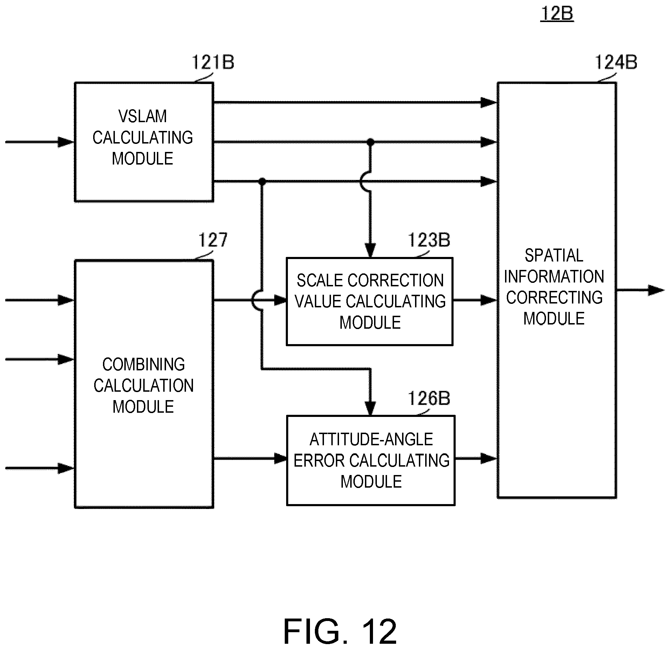

Next, a navigation device according to a third embodiment of the present disclosure is described with reference to the drawings. Fig. 11 is a functional block diagram illustrating a configuration of the navigation device according to the third embodiment of the present disclosure. Fig. 12 is a functional block diagram illustrating a configuration of a calculator according to the third embodiment of the present disclosure.

As illustrated in Figs. 11 and 12, a navigation device 10B and a calculator 12B according to the third embodiment differ from the navigation device 10A and the calculator 12A according to the second embodiment in that the observation data of the GNSS signal and output data of an IMU are used. Other configurations of the navigation device 10B and the calculator 12B may be similar to those of the navigation device 10A and the calculator 12A, and therefore, description of the similar parts is omitted.

The navigation device 10B may include the GNSS receiver 111, the GNSS receiver 112, and the calculator 12B. The GNSS receiver 111 may be connected to the GNSS antenna 21, and the GNSS receiver 112 may be connected to the GNSS antenna 22.

The calculator 12B may be connected to the GNSS receiver 111 and the GNSS receiver 112, and may be connected to the camera 30. Moreover, the calculator 12B may be connected to an IMU 40.

The GNSS antenna 21 and the GNSS antenna 22 are disposed, for example, in parallel to a direction in which the bow and the stern of the ship 900 are connected. Note that, although the arrangement of the GNSS antenna 21 and the GNSS antenna 22 is not limited to this configuration, they are desirable to be parallel to the direction in which the bow and the stern are connected. A spatial relationship of the GNSS antenna 21 and the GNSS antenna 22 in the hull coordinate system may be acquired beforehand and stored in the calculator 12B. The GNSS antenna 21 and the GNSS antenna 22 may each receive and output the GNSS signal.

By the acquisition and tracking of the GNSS signal received by the GNSS antenna 21, the GNSS receiver 111 may acquire the observation data, and output it to the calculator 12B. By the acquisition and tracking of the GNSS signal received by the GNSS antenna 22, the GNSS receiver 112 may acquire the observation data, and output it to the calculator 12B. Each observation data may at least include the accumulated value (ADR) of the carrier phase.

The IMU 40 may be a so-called inertia sensor, and, for example, have an angular velocity sensor. When the IMU 40 is the angular velocity sensor, the IMU 40 may detect angular velocities about three axes which are perpendicular to each other, and output them to the calculator 12B as sensor data.

Note that the IMU 40 may be provided with an acceleration sensor. When the IMU 40 is provided with the acceleration sensor, the IMU 40 may detect the accelerations of the same three perpendicular axes as the angular velocity sensor, and output them to the calculator 12B as the sensor data.

Similar to the GNSS receiver 111 and the GNSS receiver 112, the IMU 40 may generate the sensor data at a given time interval, and output it to the calculator 12B.

As illustrated in Fig. 12, the calculator 12B may include a VSLAM calculating module 121B, a scale correction value calculating module 123B, a spatial information correcting module 124B, an attitude-angle correction value calculating module 126B, and a combining calculation module 127.

The VSLAM calculating module 121B may estimate the VSLAM location, the VSLAM attitude angle, and the spatial information on each characteristic point by the known method using the acquired video image, similar to the VSLAM calculating module 121A.

The VSLAM calculating module 121B may output the VSLAM location to the scale correction value calculating module 123B and the spatial information correcting module 124B. The VSLAM calculating module 121B may output the VSLAM attitude angle to the attitude-angle correction value calculating module 126B and the spatial information correcting module 124B. The VSLAM calculating module 121B may output the spatial information to the spatial information correcting module 124B.

The combining calculation module 127 may correct the sensor data outputted from the IMU 40 by the observation data outputted from the GNSS receiver 111 and the GNSS receiver 112. Thus, the combining calculation module 127 may calculate a combined rate and a combined attitude angle.

For example, when the sensor data (the IMU angular velocity data) of the angular velocity is outputted from the IMU 40, the combining calculation module 127 may estimate an observation error included in the IMU angular velocity data based on the observation data from the GNSS receiver 111 and the GNSS receiver 112. Then, the combining calculation module 127 may calculate a combined angular velocity by correcting the IMU angular velocity data based on the estimated observation error. Therefore, the combined angular velocity may become more accurate than the IMU angular velocity.

For example, the combining calculation module 127 may calculate the combined attitude angle by accumulating the combined angular velocity.

Note that, in this case, for example, the GNSS rate may be used as the combined rate.

Moreover, when the sensor data (the IMU acceleration data) of the acceleration is outputted from the IMU 40, the combining calculation module 127 may estimate an observation error included in the IMU acceleration based on the observation data from the GNSS receiver 111 and the GNSS receiver 112. Then, the combining calculation module 127 may calculate a combined acceleration by correcting the IMU acceleration data based on the estimated observation error. Therefore, the combined acceleration may become more accurate than the IMU acceleration.

The combining calculation module 127 may calculate the combined rate, for example, by accumulating the combined acceleration.

The scale correction value calculating module 123B may calculate the scale correction value S by a method similar to the scale correction value calculating module 123 and a scale correction value calculating module 123A by using the plurality of VSLAM locations and GNSS rate or combined rate. The scale correction value calculating module 123B may output the scale correction value S to the spatial information correcting module 124B.

The attitude-angle correction value calculating module 126B may apply a method similar to the attitude-angle correction value calculating module 126, and calculate the attitude-angle correction value for the VSLAM attitude angle by using the VSLAM attitude angle and the combined attitude angle. The attitude-angle correction value may be defined by a value which reduces an error contained in the VSLAM attitude angle by the combined attitude angle.

The spatial information correcting module 124B may correct the spatial information by using the scale correction value S and the attitude-angle correction value, similar to the spatial information correcting module 124A. Here, the spatial information correcting module 124B may also correct the VSLAM location and the VSLAM attitude angle.

Also with such a configuration and such processing, the spatial information may be corrected with high precision since the scale correction value S and the attitude-angle correction value are highly accurate.

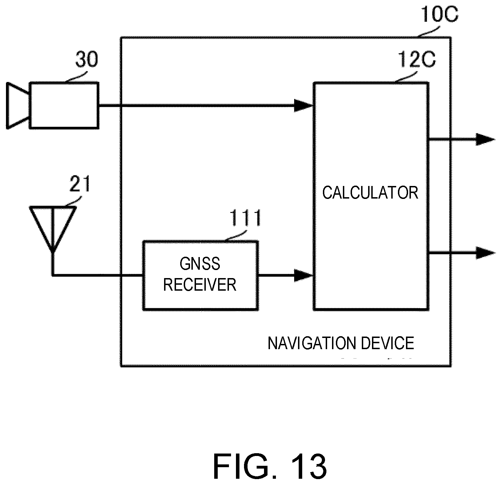

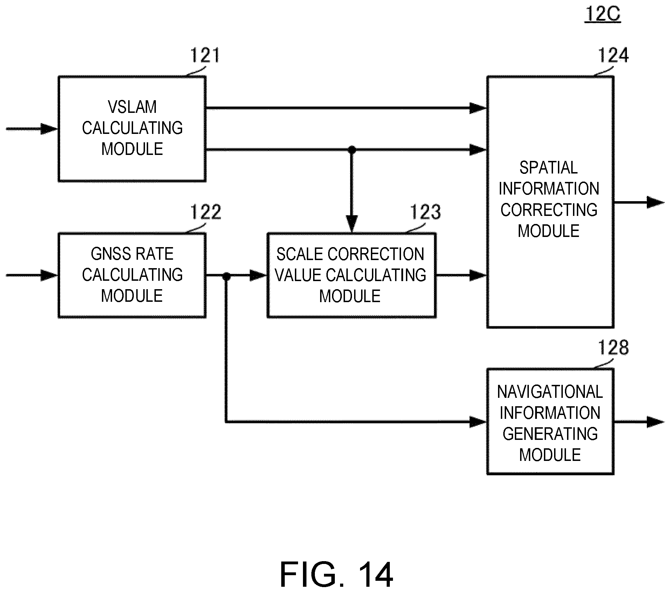

Next, a navigation device according to a fourth embodiment of the present disclosure is described with reference to the drawings. Fig. 13 is a functional block diagram illustrating a configuration of the navigation device according to the fourth embodiment of the present disclosure. Fig. 14 is a functional block diagram illustrating a configuration of a calculator according to the fourth embodiment of the present disclosure.

As illustrated in Figs. 13 and 14, a navigation device 10C and a calculator 12C according to the fourth embodiment differ from the navigation device 10 and the calculator 12 according to the first embodiment in that a navigational information generating module 128 is added. Other configurations of the navigation device 10C and the calculator 12C may be similar to those of the navigation device 10 and the calculator 12, and therefore, description of the similar parts is omitted.

The navigation device 10C may be provided with the calculator 12C. The calculator 12C may be provided with the navigational information generating module 128.

The GNSS rate may be inputted into the navigational information generating module 128 from the GNSS rate calculating module 122. The navigational information generating module 128 may generate navigational information on the ship 900 to which the navigation device 10C is provided, based on the GNSS rate. For example, the navigational information includes a speed, a location, etc. of the ship 900. The navigational information may also become highly precise by using the GNSS rate.

By such a configuration and such processing, the calculator 12C can also output the navigational information on the ship, along with the spatial information. Since these spatial information and navigational information are highly precise, an accurate navigational support may become possible.

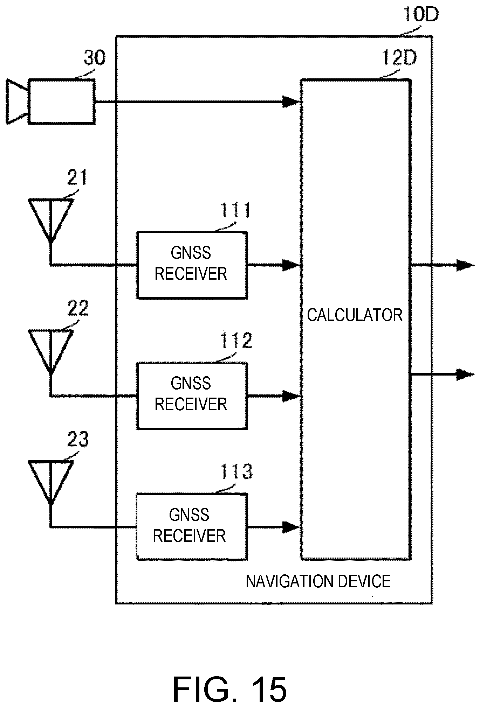

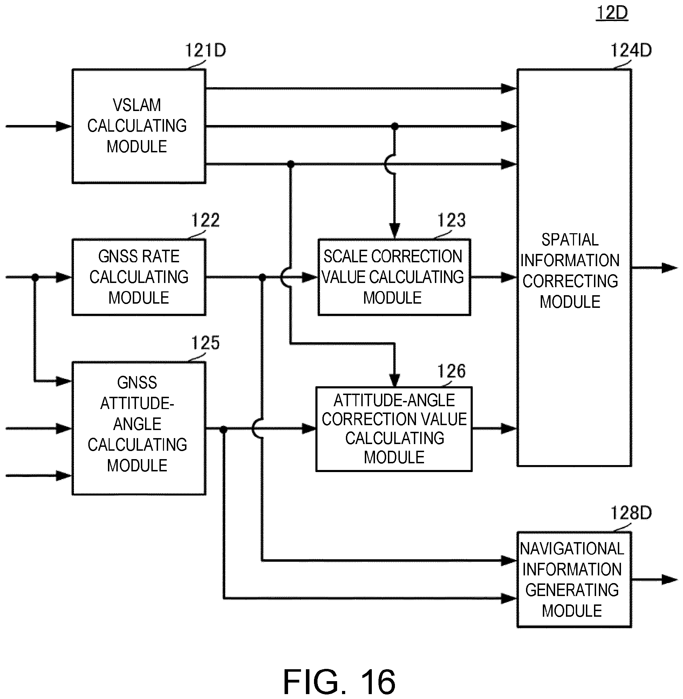

Next, a navigation device according to a fifth embodiment of the present disclosure is described with reference to the drawings. Fig. 15 is a functional block diagram illustrating a configuration of the navigation device according to the fifth embodiment of the present disclosure. Fig. 16 is a functional block diagram illustrating a configuration of a calculator according to the fifth embodiment of the present disclosure.

As illustrated in Figs. 15 and 16, a navigation device 10D and a calculator 12D according to the fifth embodiment differ from the navigation device 10A and the calculator 12A according to the second embodiment in that a navigational information generating module 128D is added. Other configurations of the navigation device 10D and the calculator 12D may be similar to those of the navigation device 10A and the calculator 12A, and therefore, description of the similar parts is omitted. Note that a VSLAM calculating module 121D of the calculator 12D may be similar to the VSLAM calculating module 121A of the calculator 12A.

The navigation device 10D may be provided with the calculator 12D. The calculator 12D may be provided with the navigational information generating module 128D.

The GNSS rate may be inputted into the navigational information generating module 128D from the GNSS rate calculating module 122. Moreover, the GNSS attitude angle may be inputted into the navigational information generating module 128D from the GNSS attitude-angle calculating module 125.

The navigational information generating module 128D may generate the navigational information on the ship 900 to which the navigation device 10D is provided, based on the GNSS rate and the GNSS attitude angle. For example, the navigational information includes a speed, an attitude, a turning angular velocity, a location, etc. of the ship 900. The navigational information may also become highly precise by using the GNSS rate and the GNSS attitude angle.

By such a configuration and such processing, the calculator 12D may also output the more detailed navigational information on the ship, along with the spatial information. Since these spatial information and the navigational information are highly precise, an accurate navigational support may become possible.

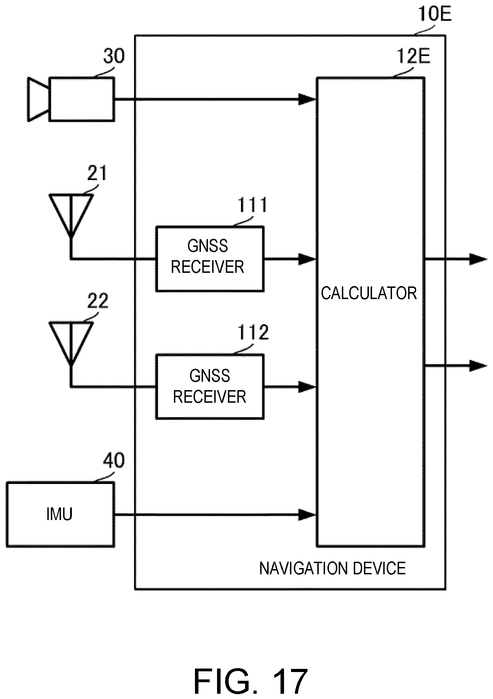

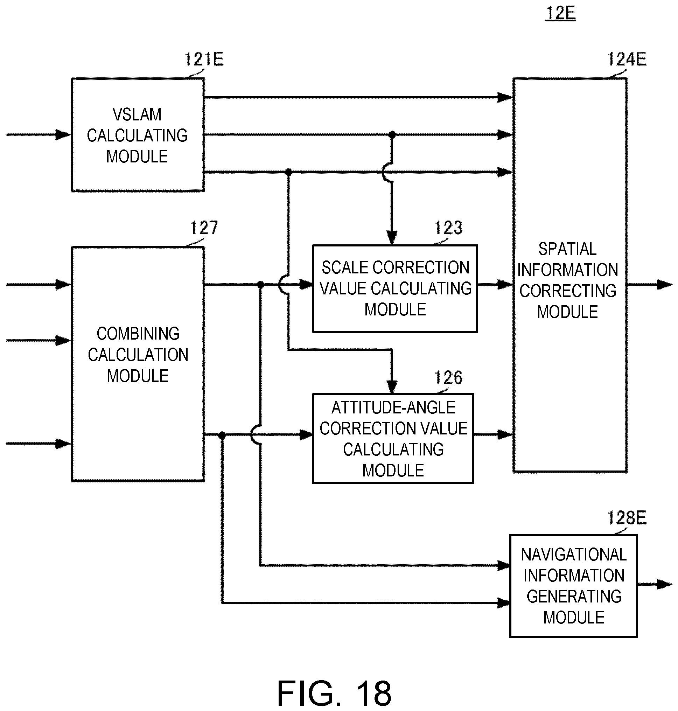

Next, a navigation device according to a sixth embodiment of the present disclosure is described with reference to the drawings. Fig. 17 is a functional block diagram illustrating a configuration of the navigation device according to the sixth embodiment of the present disclosure. Fig. 18 is a functional block diagram illustrating a configuration of a calculator according to the sixth embodiment of the present disclosure.

As illustrated in Figs. 17 and 18, a navigation device 10E and a calculator 12E according to the sixth embodiment differ from the navigation device 10B and the calculator 12B according to the third embodiment in that a navigational information generating module 128E is added. Other configurations of the navigation device 10E and the calculator 12E may be similar to those of the navigation device 10B and the calculator 12B, and therefore, description of the similar parts is omitted. Note that a VSLAM calculating module 121E of the calculator 12E may be similar to the VSLAM calculating module 121B of the calculator 12B.

The navigation device 10E may be provided with the calculator 12E. The calculator 12E may be provided with the navigational information generating module 128E.

The combined rate and the combined attitude angle may be inputted into the navigational information generating module 128E from the combining calculation module 127.

The navigational information generating module 128E may generate the navigational information on the ship 900 to which the navigation device 10E is provided, based on the combined rate and the combined attitude angle. For example, the navigational information includes a speed, an attitude, a turning angular velocity, a location, etc. of the ship 900. The navigational information may also become highly precise by using the GNSS rate and the GNSS attitude angle.

By such a configuration and such processing, the calculator 12E may also output the more detailed navigational information on the ship, along with the spatial information. Since these spatial information and the navigational information are highly precise, an accurate navigational support may become possible.

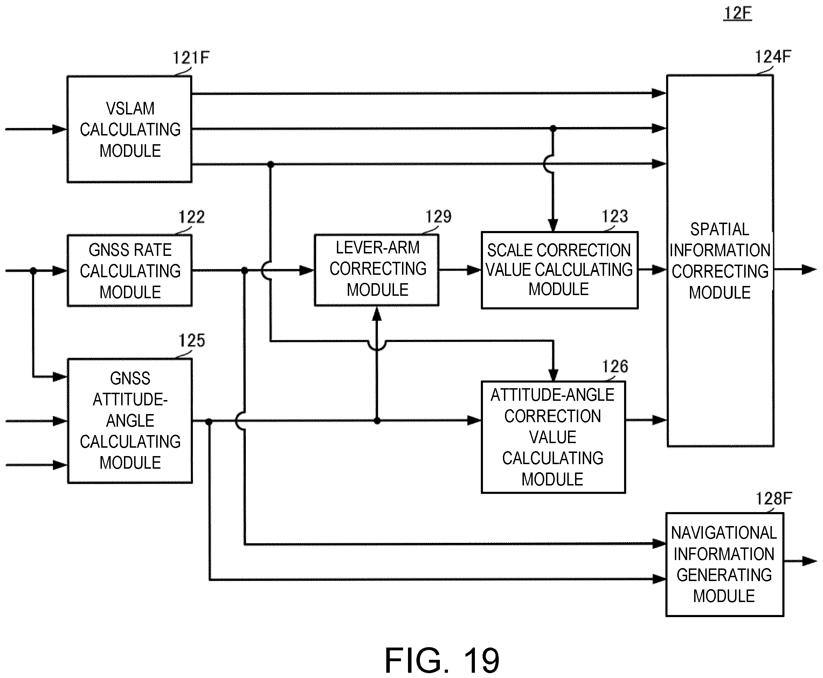

Next, a navigation device according to a seventh embodiment of the present disclosure is described with reference to the drawings. Fig. 19 is a functional block diagram illustrating a configuration of a calculator according to the seventh embodiment of the present disclosure.

As illustrated in Fig. 19, a navigation device 10F and a calculator 12F according to the seventh embodiment differs from the navigation device 10D and the calculator 12D according to the fifth embodiment in that a lever-arm correcting module 129 is added. Other configurations of the navigation device 10F and the calculator 12F may be similar to those of the navigation device 10D and the calculator 12D, and therefore, description of the similar parts is omitted. Note that a VSLAM calculating module 121F of the calculator 12F may be similar to the VSLAM calculating module 121D of the calculator 12D, and a navigational information generating module 128F may be similar to the navigational information generating module 128D of the calculator 12D.

The GNSS rate and the GNSS attitude angle may be inputted into the lever-arm correcting module 129. Moreover, the lever-arm correcting module 129 may store a spatial relationship of the GNSS antenna 21, the GNSS antenna 22, the GNSS antenna 23, and the camera 30 in the hull coordinate system.

The lever-arm correcting module 129 may carry out a lever arm correction of the GNSS rate by a known method using the spatial relationship of the GNSS antennas for which the GNSS rate is calculated and the camera 30, and the GNSS attitude angle. The lever-arm correcting module 129 may output the GNSS rate after the lever arm correction to the scale correction value calculating module 123.

The scale correction value calculating module 123 may calculate the scale correction value S by the method described above using the GNSS rate after the lever arm correction.

By performing such a lever arm correction, an error due to the spatial relationship of the GNSS antennas and the camera 30 is corrected, and the scale correction value S can be calculated with higher precision.

Note that this lever arm correction may be applicable to other embodiments described above. Further, without being limited to this configuration, for example, when the IMU is used, the lever arm correction may also be used for a correction of an error due to a spatial relationship of the GNSS antennas and the IMU.

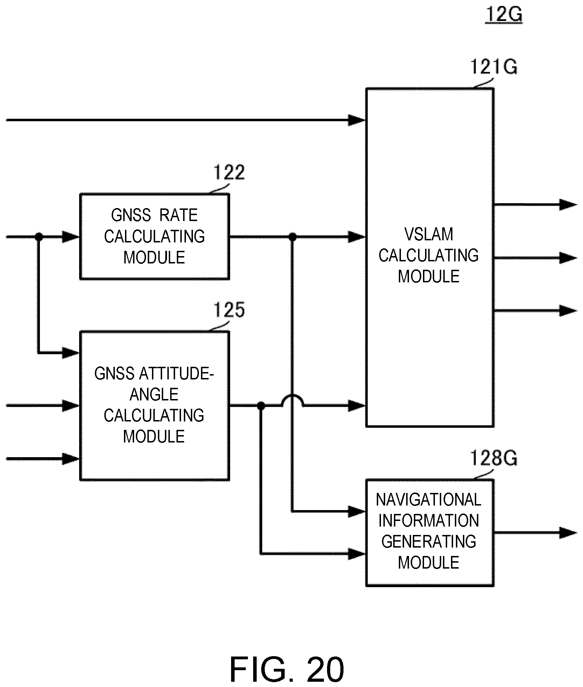

Next, a navigation device according to an eighth embodiment of the present disclosure is described with reference to the drawings. Fig. 20 is a functional block diagram illustrating a configuration of a calculator according to the eighth embodiment of the present disclosure.

As illustrated in Fig. 20, a calculator 12G according to the seventh embodiment may differ from the navigation device 10D and the calculator 12D according to the fifth embodiment in that the VSLAM calculation is performed with a constrained condition. Moreover, since the calculator 12G does not need to perform the calculation of the scale correction value, the calculation of the attitude-angle correction value, and the correction of the spatial information, the scale correction value calculating module, the attitude-angle correction value calculating module, and the spatial information correcting module may be omitted. Other configurations of the calculator 12G may be similar to those of the calculator 12D, and therefore, description of the similar parts is omitted. Note that a navigational information generating module 128G may be similar to the navigational information generating module 128D of the calculator 12D.

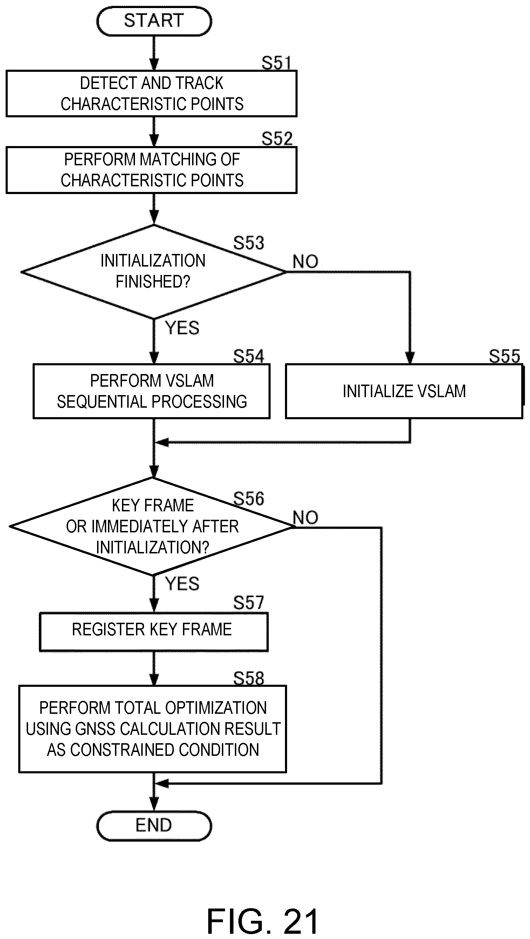

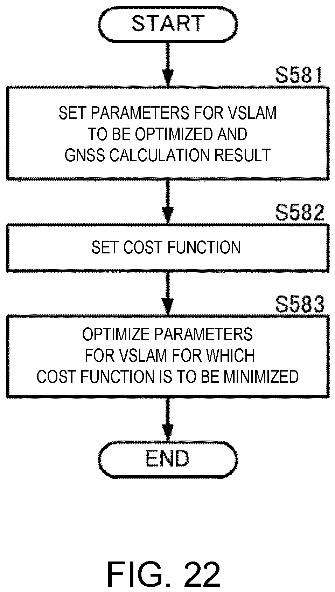

The GNSS rate and the GNSS attitude angle may be inputted into the VSLAM calculating module 121G. The VSLAM calculating module 121G may perform the VSLAM calculation by using the GNSS rate and the GNSS attitude angle as a constrained condition. In detail, the VSLAM calculating module 121G performs processing, for example, illustrated in Figs. 21 and 22. Fig. 21 is a flowchart illustrating a main flow of the VSLAM calculation with the constrained condition. Fig. 22 is a flowchart illustrating a total optimization with the constrained condition.

As illustrated in Fig. 21, the VSLAM calculating module 121G may detect a characteristic point in a plurality of frames using the video image, and track the characteristic point of each frame (Step S51). The VSLAM calculating module 121G may perform a matching of the tracking characteristic points of the plurality of frames (Step S52).

If an initialization of each step described above is finished (Step S53: YES), the VSLAM calculating module 121G may perform VSLAM sequential processing (Step S54). On the other hand, if the initialization is not finished (Step S53: NO), the VSLAM calculating module 121G may finish the initialization (Step S55).

If the VSLAM calculating module 121G detects whether the frame is a key frame or it is immediately after the initialization (Step S56: YES), it may register the frame as the key frame (Step S57). The key frame is set, for example, at a given frame interval.

The VSLAM calculating module 121G may perform a total optimization of the VSLAM calculation after the registration of the key frame, by using the GNSS calculation result (e.g., the GNSS rate and the GNSS attitude angle) (Step S58).

Note that, if the frame is neither the key frame nor immediately after the initialization (Step S56: NO), the VSLAM calculating module 121G may continue the VSLAM process, without performing the optimization.

As illustrated in Fig. 22, the VSLAM calculating module 121G may first set parameters for VSLAM to be optimized and the GNSS calculation result as processing of the total optimization of the VSLAM calculation (Step S581). The parameters for VSLAM include, for example, internal parameters of the camera 30, external parameters of the camera 30, a lens distortion coefficient, and a three-dimensional location of the characteristic point. The GNSS calculation result may include a displacement from the reference point based on the GNSS rate, and the attitude angles with respect to the reference coordinate axes based on the GNSS attitude angle.

The VSLAM calculating module 121G may set a cost function corresponding to the constrained condition (Step S582). The cost function is set, for example, by a penalty on the basis of the total of a re-projection error in the VSLAM calculation, and the GNSS calculation result.

The VSLAM calculating module 121G may optimize the parameters for VSLAM for which the cost function is to be minimized, by using the method of least square, various filter calculations, etc. (Step S583).

By having such a configuration and such processing, the spatial information calculated by the VSLAM calculation may become highly precise. Therefore, this calculator 12G can output the highly-precise spatial information, without performing the correction of the scale and the correction of the attitude angle.

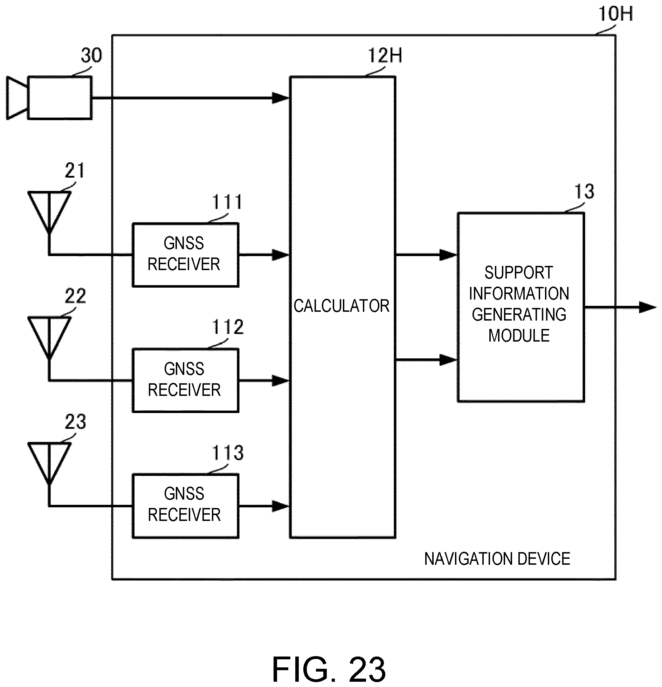

Next, a navigation device according to a ninth embodiment of the present disclosure is described with reference to the drawings. Fig. 23 is a functional block diagram illustrating a configuration of the navigation device according to the ninth embodiment of the present disclosure.

As illustrated in Fig. 23, a navigation device 10H according to the ninth embodiment differs from the navigation device 10D according to the fifth embodiment in that a support information generating module 13 is added. Other configurations of the navigation device 10H may be similar to those of the navigation device 10D, and therefore, description of the similar parts is omitted. Note that a calculator 12H may be similar to the calculator 12D, and therefore, description thereof is omitted.

The navigation device 10H may be provided with the support information generating module 13. The spatial information and the navigational information may be inputted into the support information generating module 13 from the calculator 12H.

The support information generating module 13 may generate and output support information by using the spatial information and the navigational information. The support information includes, for example, a three-dimensional map outside the ship 900 to which the navigation device 10H is provided, a position and a speed of the ship 900 inside the three-dimensional map, or a speed of a given position in the ship 900.

The support information generating module 13 may generate a support image 50 by using the support information, and, for example, display it on a display unit (not illustrated).

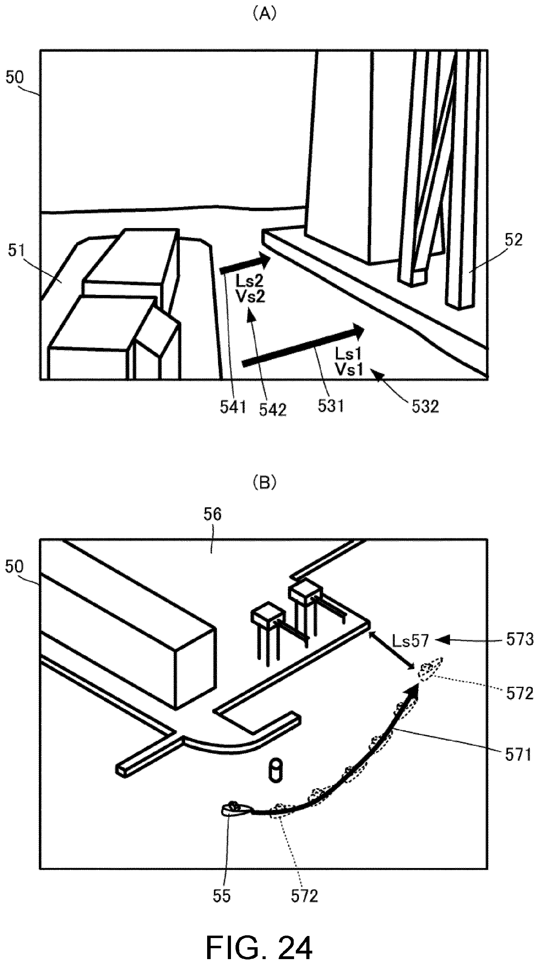

For example, the support image may include images as illustrated in Figs. 24(A) and 24(B). Figs. 24(A) and 24(B) are views illustrating examples of the support image.

In Fig. 24(A), an image 51 of the ship 900 and an image 52 of a building of a quaywall are displayed on the support image 50. The support image 50 may be based on the video image obtained from the camera 30.

Further, a symbol mark 531 indicative of a direction in which a specific position of the image 51 corresponding to a first specific point of the ship 900 approaches a first specific position of the quaywall, and data 532 indicative of a distance and an approaching speed (LS1 and Vs1 in Fig. 24(A)) may be displayed on the support image 50. Moreover, a symbol mark 541 indicative of a direction in which a specific position of the image 51 corresponding to a second specific point of the ship 900 approaches a second specific position of the quaywall, and data 542 indicative of a distance and an approaching speed (LS2 and Vs2 in Fig. 24(A)) may be displayed on the support image 50. Note that, here, although the two specific positions are illustrated, the number of specific positions may suitably be set.

The approaching directions, the approaching speeds, and the distances of the specific positions may be corrected with high precision by using the GNSS calculation results. Therefore, the support image 50 may become an indication illustrating the actual approaching direction, approaching speed, and distance with high precision, by using VSLAM. Therefore, highly-precise support information can be provided.

In Fig. 24(B), an image 55 of the ship 900 and an image 56 of a building of a quaywall are displayed on the support image 50. The support image 50 may be based on the video image obtained from the camera 30. Note that the image 55 is created, for example, from a three-dimensional model of the ship based on the point of view of the support image 50.

Further, an estimated track 571, an estimated location 572, and a symbol mark and data 53 indicative of a distance between the ship 900 and the quaywall after a given period of time (Ls57 illustrated in Fig. 24(B)) may be displayed on the support image 50. Note that, here, although the symbol mark and the data indicative of the distance between the ship 900 and the quaywall is displayed at one location, the number of location may suitably be set.

The estimated track 571, the estimated location 572, and the distance between the ship 900 and the quaywall after the given period of time may be corrected with high precision by using the GNSS calculation results. Therefore, the support image 50 may become an indication illustrating the actual traveling state and the estimated traveling state toward the quaywall with high precision by using VSLAM. Therefore, highly-precise support information can be provided.

Note that the configurations and processings of the above embodiments may be suitably combined and the combination may obtain corresponding operation and effects.

Moreover, although in the above description the GNSS calculation result, such as the GNSS rate, is calculated based on the amount of change in the phase of the carrier signal, other elements from which the speed and the attitude angle in the GNSS signal can be calculated, such as an amount of change in the frequency of the carrier signal and an amount of change in the code phase, may also be used.

### DESCRIPTION OF REFERENCE CHARACTERS

- 10, 10A, 10B, 10C, 10D, 10E, 10F, 10H:: Navigation Device
- 12, 12A, 12B, 12C, 12D, 12E, 12F, 12G, 12H:: Calculator
- 13:: Support Information Generating Module
- 21, 22, 23:: GNSS Antenna
- 30:: Camera
- 40:: IMU
- 50:: Support Image
- 51, 52, 55, 56:: Image
- 90:: Reference Point
- 91:: Observing Location
- 111, 112, 113:: GNSS Receiver
- 121, 121A, 121B, 121D, 121E, 121F, 121G:: VSLAM Calculating Module
- 122:: GNSS Rate Calculating Module
- 123, 123A, 123B:: Scale Correction Value Calculating Module
- 124, 124A, 124B:: Spatial Information Correcting Module
- 125:: GNSS Attitude-angle Calculating Module
- 126, 126B:: Attitude-angle Correction Value Calculating Module
- 127:: Combining Calculation Module
- 128, 128D, 128E, 128F, 128G:: Navigational Information Generating Module
- 129:: Lever-arm Correcting Module
- 531, 541:: Symbol Mark
- 571:: Estimated Track
- 572:: Estimated Location
- 900:: Ship
- 910, 910v:: Quaywall
- 911, 911v:: Characteristic Point
- 920, 920v:: Building
- 921, 921v:: Characteristic Point

### TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Unless otherwise noted, numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A navigation device, comprising:
a GNSS rate calculating module configured to calculate a GNSS rate using one of an amount of change in a phase of a GNSS signal that is a positioning signal transmitted from a positioning satellite and an amount of change in a frequency of the GNSS signal;
a VSLAM calculating module configured to estimate VSLAM locations at a plurality of time points by performing a VSLAM calculation using a video image; and
a scale correction value calculating module configured to calculate a scale correction value for the VSLAM location by using the VSLAM locations at two or more time points of the plurality of time points estimated by the VSLAM calculating module, and the GNSS rate.

2. A navigation device, comprising:
a GNSS attitude-angle calculating module configured to calculate a GNSS attitude angle by using an accumulated value of a phase of a GNSS signal that is a positioning signal transmitted from a positioning satellite;
a VSLAM calculating module configured to estimate VSLAM attitude angles at a plurality of time points by performing a VSLAM calculation using a video image; and
an attitude-angle correction value calculating module configured to calculate a correction value for the VSLAM attitude angle by using the VSLAM attitude angles at two or more time points of the plurality of time points estimated by the VSLAM calculating module, and the GNSS attitude angle.

3. A navigation device, comprising:
a GNSS rate calculating module configured to calculate a GNSS rate using one of an amount of change in a phase of a GNSS signal that is a positioning signal transmitted from a positioning satellite and an amount of change in a frequency of the GNSS signal;
a GNSS attitude-angle calculating module configured to calculate a GNSS attitude angle by using an accumulated value of the phase of the GNSS signal; and
a VSLAM calculating module configured to estimate spatial information by performing a VSLAM calculation in which a constrained condition is set based on the GNSS rate and the GNSS attitude angle, using a video image.

4. The navigation device of claim 1, comprising:
a GNSS attitude-angle calculating module configured to calculate a GNSS attitude angle by using an accumulated value of the phase of the GNSS signal; and
an attitude-angle correction value calculating module configured to calculate a correction value for a VSLAM attitude angle by using VSLAM attitude angles at two or more time points of the plurality of time points estimated by the VSLAM calculating module, and the GNSS attitude angle.

5. The navigation device of claim 4, comprising a lever-arm correcting module configured to perform a lever arm correction in which the GNSS rate corresponds to coordinates of the VSLAM calculation by using the GNSS attitude angle, and output the GNSS rate after the lever arm correction to the scale correction value calculating module.

6. The navigation device of claim 4 or 5, wherein the VSLAM calculating module optimizes the VSLAM calculation using the GNSS rate and the GNSS attitude angle.

7. A navigation device, comprising:
a combining calculation module configured to calculate a combined rate using one of an amount of change in a phase of a GNSS signal that is a positioning signal transmitted from a positioning satellite and an amount of change in a frequency of the GNSS signal, and observation data of an inertia sensor, and calculate a combined attitude angle using an accumulated value of the phase of the GNSS signal and the observation data of the inertia sensor;
a VSLAM calculating module configured to estimate VSLAM locations and VSLAM attitude angles at a plurality of time points by performing a VSLAM calculation using a video image;
a scale correction value calculating module configured to calculate a scale correction value for the VSLAM location using the VSLAM locations at two or more time points of the plurality of time points estimated by the VSLAM calculating module, and the combined rate; and
an attitude-angle correction value calculating module configured to calculate a correction value for the VSLAM attitude angle using the VSLAM attitude angle estimated by the VSLAM calculating module, and the combined attitude angle.

8. The navigation device of claim 7, wherein the VSLAM calculating module optimizes the VSLAM calculation using the combined rate and the combined attitude angle.

9. The navigation device of any one of claims 1, 4, 5, 6, and 7, comprising a spatial information correcting module configured to correct spatial information estimated by the VSLAM calculating module using the scale correction value.

10. The navigation device of any one of claims 4 to 7, comprising a spatial information correcting module configured to correct spatial information estimated by the VSLAM calculating module using the scale correction value and the correction value for the VSLAM attitude angle.

11. The navigation device of claim 9 or 10, comprising a support information generating module configured to generate navigational support information using the spatial information outputted from the spatial information correcting module.

12. The navigation device of claim 3, comprising a support information generating module configured to generate navigational support information using the spatial information outputted from the VSLAM calculating module.

13. The navigation device of claim 11 or 12, wherein the navigational support information is image data in which map data obtained from the spatial information, and navigational data obtained from an observation result of the GNSS signal containing the GNSS rate are overlapped with each other.

14. The navigation device of any one of claims 1 to 13, wherein the phase and the frequency of the GNSS signal are a phase and a frequency of a carrier signal.

15. A VSLAM correcting method, comprising the steps of:
calculating a GNSS rate using one of an amount of change in a phase of a GNSS signal that is a positioning signal transmitted from a positioning satellite and an amount of change in a frequency of the GNSS signal;
estimating VSLAM locations at a plurality of time points by performing a VSLAM calculation using a video image; and
calculating a scale correction value for the VSLAM location using the VSLAM locations at two or more time points of the plurality of time points estimated by the VSLAM calculation, and the GNSS rate.

16. A VSLAM correcting method, comprising the steps of:
calculating a GNSS attitude angle using an accumulated value of a phase of a GNSS signal that is a positioning signal transmitted from a positioning satellite;
estimating VSLAM attitude angles at a plurality of time points by performing a VSLAM calculation using a video image; and
calculating a correction value for the VSLAM attitude angle using the estimated VSLAM attitude angles at two or more time points of the plurality of time points, and the GNSS attitude angle.

17. A method of estimating spatial information, comprising the steps of:
calculating a GNSS rate using one of an amount of change in a phase of a GNSS signal that is a positioning signal transmitted from a positioning satellite and an amount of change in a frequency of the GNSS signal;
calculating a GNSS attitude angle using an accumulated value of the phase of the GNSS signal; and
estimating spatial information by performing a VSLAM calculation in which a constrained condition is set based on the GNSS rate and the GNSS attitude angle, by using a video image.

18. The VSLAM correcting method of claim 15, comprising the steps of:
calculating a GNSS attitude angle using an accumulated value of the phase of the GNSS signal;
estimating VSLAM attitude angles at a plurality of time points by performing the VSLAM calculation; and
calculating a correction value for the VSLAM attitude angle using the estimated VSLAM attitude angles at two or more time points of the plurality of time points, and the GNSS attitude angle.

19. A VSLAM correcting method, comprising the steps of:
calculating a combined rate using one of an amount of change in a phase of a GNSS signal that is a positioning signal transmitted from a positioning satellite and an amount of change in a frequency of the GNSS signal, and observation data of an inertia sensor;
calculating a combined attitude angle using an accumulated value of the phase of the GNSS signal and the observation data of the inertia sensor;
estimating VSLAM locations at a plurality of time points by performing a VSLAM calculation using a video image;
estimating VSLAM attitude angles at the plurality of time points by performing the VSLAM calculation using the video image;
calculating a scale correction value for the VSLAM location using the VSLAM locations at two or more time points of the plurality of time points estimated by the VSLAM calculation, and the combined rate; and
calculating a correction value for the VSLAM attitude angle using the VSLAM attitude angles at two or more time points of the plurality of time points estimated by the VSLAM calculation, and the combined attitude angle.

20. A VSLAM correcting program configured to cause a processing unit to perform processing, the processing comprising:
calculating a GNSS rate using one of an amount of change in a phase of a GNSS signal that is a positioning signal transmitted from a positioning satellite and an amount of change in a frequency of the GNSS signal;
estimating VSLAM locations at a plurality of time points by performing a VSLAM calculation using a video image; and
calculating a scale correction value for the VSLAM location using the VSLAM locations at two or more time points of the plurality of time points estimated by the VSLAM calculation, and the GNSS rate.

21. A VSLAM correcting program configured to cause a processing unit to perform processing, the processing comprising:
calculating a GNSS attitude angle using an accumulated value of a phase of a GNSS signal that is a positioning signal transmitted from a positioning satellite;
estimating VSLAM attitude angles at a plurality of time points by performing a VSLAM calculation using a video image; and
calculating a correction value for the VSLAM attitude angle using the estimated VSLAM attitude angles at two or more time points of the plurality of time points, and the GNSS attitude angle.

22. A spatial information estimating program configured to cause a processing unit to perform processing, the processing comprising:
calculating a GNSS rate using one of an amount of change in a phase of a GNSS signal that is a positioning signal transmitted from a positioning satellite and an amount of change in a frequency of the GNSS signal;
calculating a GNSS attitude angle using an accumulated value of the phase of the GNSS signal; and
estimating spatial information by performing a VSLAM calculation in which a constrained condition is set based on the GNSS rate and the GNSS attitude angle, by using a video image.

23. The VSLAM correcting program of claim 20, comprising:
calculating a GNSS attitude angle using an accumulated value of the phase of the GNSS signal;
estimating VSLAM attitude angles at a plurality of time points by performing the VSLAM calculation; and
calculating a correction value for the VSLAM attitude angle using the estimated VSLAM attitude angles at two or more time points of the plurality of time points, and the GNSS attitude angle.

24. A VSLAM correcting program configured to cause a processing unit to perform processing, the processing comprising:
calculating a combined rate using one of an amount of change in a phase of a GNSS signal that is a positioning signal transmitted from a positioning satellite and an amount of change in a frequency of the GNSS signal, and observation data of an inertia sensor;
calculating a combined attitude angle using an accumulated value of the phase of the GNSS signal and the observation data of the inertia sensor;
estimating VSLAM locations at a plurality of time points by performing a VSLAM calculation using a video image;
estimating VSLAM attitude angles at the plurality of time points by performing the VSLAM calculation using the video image;
calculating a scale correction value for the VSLAM location using the VSLAM locations at two or more time points of the plurality of time points estimated by the VSLAM calculation, and the combined rate; and
calculating a correction value for the VSLAM attitude angle using the VSLAM attitude angles at two or more time points of the plurality of time points estimated by the VSLAM calculation, and the combined attitude angle.
